# EUROPÄISCHE PATENTSCHRIFT

(11) **EP 0 529 591 B1**
(45) Veröffentlichungstag und Bekanntmachung des Hinweises auf die Patenterteilung: **30.10.1996**
(21) Anmeldenummer: 92114501.7
(22) Anmeldetag: 26.08.1992
(51) Int. Cl.: B60J 1/20, E06B 9/68

(54) **Rolloanordnung, vorzugsweise für Kraftfahrzeugheckscheiben**
Roller blind, preferably for vehicle rear windows
Dispositif de store, de préference pour lunettes arrières de véhicules

(30) Priorität: 28.08.1991 DE 9110637 U
(43) Veröffentlichungstag der Anmeldung: 03.03.1993
(73) Patentinhaber: Hüppe Form Sonnenschutz- und Raumtrennsysteme GmbH, D-26133 Oldenburg (DE)
(72) Erfinder: Lattek, Siegfried, W-6920 Sinsheim (DE); Wagner, Hans-Jörg, W-6950 Mosbach (DE); Kappes, Hans-Jürgen, W-6920 Sinsheim-Hilsbach (DE)
(74) Vertreter: Eisenführ, Speiser & Partner

(56) Entgegenhaltungen:
- DE-A- 3 428 700
- DE-A- 3 526 745
- DE-A- 3 608 927
- DE-U- 8 703 605

## Beschreibung

Die Erfindung betrifft eine Rolloanordnung, vorzugsweise für Kraftfahrzeugheckscheiben, mit einer Wickelwelle, einem Behang, der von der Wickelwelle abziehbar und auf diese aufwickelbar ist, einem Fallstab, an dem der abziehbare Rand des Behanges befestigt ist, ersten Befestigungspunkten, an denen die Wickelwelle befestigt ist, zweiten Befestigungspunkten, die die Ebene aufspannen und begrenzen, in der der Behang in abgezogenem Zustand liegt, sowie einem Motor und einem durch diesen vorspannbaren ersten Kraftspeicher zur Betätigung des Behanges.

Derartige Rolloanordnungen sind bekannt und finden insbesondere in Kraftfahrzeugen Anwendung. So ist in der DE-OS 34 28 700 eine "Kraftfahrzeug-Heckscheibenanordnung" offenbart, bei der das abziehbare freie Ende des Behanges an einem parallel zur Wickelwelle liegenden Teleskoprohr befestigt ist. Die verschiebbaren Teile des Teleskoprohres sind durch Federkraft in die ausgezogene Stellung vorgespannt. Aus den Enden des Teleskoprohres tritt eine Schnur heraus, die um Umlenkrollen in den oberen Eckbereichen der Heckscheibe geführt ist und durch die durch Zugbetätigung der Rollovorhang ausgezogen und die beweglichen Teile des Teleskoprohres zusammengeschoben werden. Die Zugbetätigung erfolgt vom unteren Bereich der Heckscheibe durch einen Elektromotor. Das andere Ende des Behanges ist an einer Wickelwelle befestigt, die durch Federkraft im Aufwickelsinn vorspannbar ist, d.h. durch Ausfahren des Behanges vorgespannt wird. Das Einfahren des Behanges erfolgt nach Freigabe der Wickelwelle durch die Federkraft. Dabei werden gleichzeitig die beweglichen Enden des Teleskoprohres wieder in ihre ausgefahrene Stellung verschoben. Das Teleskoprohr dient folglich in erster Linie dazu, die Schnüre, welche um die in den oberen Eckbereichen der Heckscheibe liegenden Umlenkrollen zum Motor zurücklaufen, entlang den schrägen Seitenrändern der Heckscheibe zu halten.

Bei dieser bekannten Rolloanordnung besteht das Problem jedoch einerseits darin, daß neben der zur Aufwickelung der Wickelwelle erforderlichen Feder in dem Teleskoprohr eine weitere Feder erforderlich ist, die die verschiebbaren Teile nach außen bewegt, und daS andererseits in den oberen Eckbereichen des Fensters Umlenkrollen vorgesehen werden müssen, um das Rollo von unten durch Motorkraft mittels der Schnüre abzurollen. Eine Anbringung des Motors am Fahrzeughimmel verbietet sich im allgemeinen aus Platzgründen. Dies hat aber in den Seitenbereichen des Fensters eine doppelte Schnurführung zur Folge, die nicht nur in ästhetischer Hinsicht unerwünscht sein kann, sondern z.B. bei einer Verhakung mit abgelegten Gegenständen auch eine erhöhte Störanfälligkeit mit sich bringen kann. Die erforderlichen Umlenkrollen verursachen ebenso wie das ausziehbare und mit Federn versehene Teleskoprohr relativ hohe Kosten. Ähnliche Probleme bestehen bei der in der WO-A-85/00633 beschriebenen Spannvorrichtung für ein Rollo, bei der mit einer in der Wickelwelle angeordneten Drehfeder sowie mit seitlichen und bis in die oberen Eckbereiche geführten doppelten Schnüren das Rollo in ausgefahrenem Zustand gespannt werden soll.

DE-GM-8 703 605 beschreibt eine Rolloanordnung, die sowohl in Aufals auch in Abwickelrichtung motorgetrieben ist. Auch bei dieser Rolloanordnung müssen in den oberen Eckbereichen des Fensters Umlenkrollen vorgesehen werden, um das Rollo von unten durch Motorkraft mittels der Schnüre abzurollen. Eine Zugfeder ist im Fallstab vorhanden, um den Ausgleich der Zugspannungen in den Schnüren zu bewirken.

Die den Merkmalen des Oberbegriffs des Anspruchs 1 entsprechende DE-A-3 608 927 beschreibt eine Rolloanordnung, bei der eine in einer im Querschnitt C-förmigen Führungsschiene festgelegte Zugfeder zwischen einer Befestigungseinrichtung einerseits und dem Ende eines Fallstabes andererseits angreift. Die Zugfeder benötigt ein kompliziertes Gehäuse mit einer unteren Halterung und einem oberen Umlenkteil, das einerseits eine Befestigungseinrichtung und andererseits eine Umlenkstelle bildet.

Der Erfindung liegt die Aufgabe zugrunde, eine Rolloanordnung vorzugsweise für Kraftfahrzeugheckscheiben zu schaffen, die bei mindestens gleicher Zuverlässigkeit wesentlich einfacher aufgebaut und somit kostengünstiger ist.

Diese Aufgabe wird durch die Merkmale des Anspruches 1 gelöst.

Der erste Kraftspeicher kann jeweils eine Seilrolle an den Enden des Fallstabes und Drehfedern aufweisen, die die Seilrolle mit einem Drehmoment beaufschlagen, so daß jeweils in den zweiten Befestigungspunkten befestigte Schnüre bei Freigabe der Wickelwelle auf die Seilrolle aufgewickelt werden und der Behang dadurch von der Wickelwelle abgewickelt wird.

Alternativ dazu kann der erste Kraftspeicher auch jeweils ein zum Eingriff mit einer Perlenschnur ausgebildetes Zahnrad an den Enden des Fallstabes und Drehfedern aufweisen, die die Zahnräder mit einem Drehmoment beaufschlagen, so daß die Zahnräder an zumindest in den zweiten Befestigungspunkten befestigten Perlenschnüren bei Freigabe der Wickelwelle entlanglaufen und dadurch den Behang von der Wickelwelle abwickeln.

Für die Verwendung an Kraftfahrzeugheckscheiben ist die Wickelwelle vorzugsweise parallel und in der Nähe des unteren Scheibenrandes angeordnet, so daß der Fallstab mit dem daran befestigten Ende des Behanges in Richtung auf den oberen Scheibenrand bewegbar ist.

Der Motor ist dann z.B. unmittelbar in die Wickelwelle eingebaut.

Vorteilhaft bei dieser Lösung ist insbesondere, daß der Fallstab selbst dann relativ einfach aufgebaut ist, wenn die Breite des Behanges entsprechend der Heckscheibenform abnimmt. Durch Einsparung der teleskopartigen Ausführung sowie der zum Verschieben der Teleskoparme erforderlichen Feder, werden ebenso wie durch Einsparung der beim obengenannten Stand der Technik erforderlichen Umlenkrollen Kostenvorteile erzielt.

Eine bevorzugte Weiterbildung der Erfindung besteht darin, die Abwicklung des Behangs von der Wickelwelle durch Antreiben der Wickelwelle mit dem Motor zu unterstützen. Dies kann dadurch geschehen, daß der Motor - sofern es sich um einen Gleichstrommotor handelt - mit umgepolter Versorgungsspannung betrieben wird, oder daß z.B. ein zwischen Motor und Wickelwelle vorgesehenes Getriebe umgesteuert wird.

Ferner kann in der Wickelwelle ein zweiter Kraftspeicher vorgesehen sein, der beim Abwickeln des Behangs vorgespannt wird, und zwar vorzugsweise durch den zur Unterstützung der Abwicklung angesteuerten Motor.

Der besondere Vorteil dieser Weiterbildung liegt darin, daß die Motorkraft besser ausgenutzt wird und somit kleinere Motoren in der Wickelwelle eingesetzt werden können. Die Aufwickelung des Behangs auf die Wickelwelle wird nämlich durch den vorgespannten zweiten Kraftspeicher unterstützt, so daß eine geringere Motorkraft ausreichend ist. Andererseits wird durch reversierte Ansteuerung des Motors während der durch den ersten Kraftspeicher bewirkten Abwicklung des Behangs nicht nur diese Abwicklung unterstützt, sondern auch der zweite Kraftspeicher vorgespannt.

Ein weiterer Vorteil dieser Weiterbildung liegt darin, daß der zweite Kraftspeicher die Spannung des ausgefahrenen Behangs verbessert und dadurch eine Faltenbildung zum Beispiel bei großer Hitze verhindert.

Der zweite Kraftspeicher ist vorzugsweise durch eine Drehfeder gebildet.

Weitere Einzelheiten, Merkmale und Vorteile der Erfindung ergeben sich aus der nachfolgenden Beschreibung eines Ausführungsbeispiels anhand der Zeichnung.

Es zeigt:
- Fig. 1: eine schematische Darstellung einer für eine Kraftfahrzeugheckscheibe vorgesehenen Rolloanordnung,
- Fig. 2: eine Querschnittsdarstellung des Endbereiches eines Fallstabes, und
- Fig. 3: eine schematische Darstellung der Wickelwelle einer zweiten Ausführungsform der Erfindung.

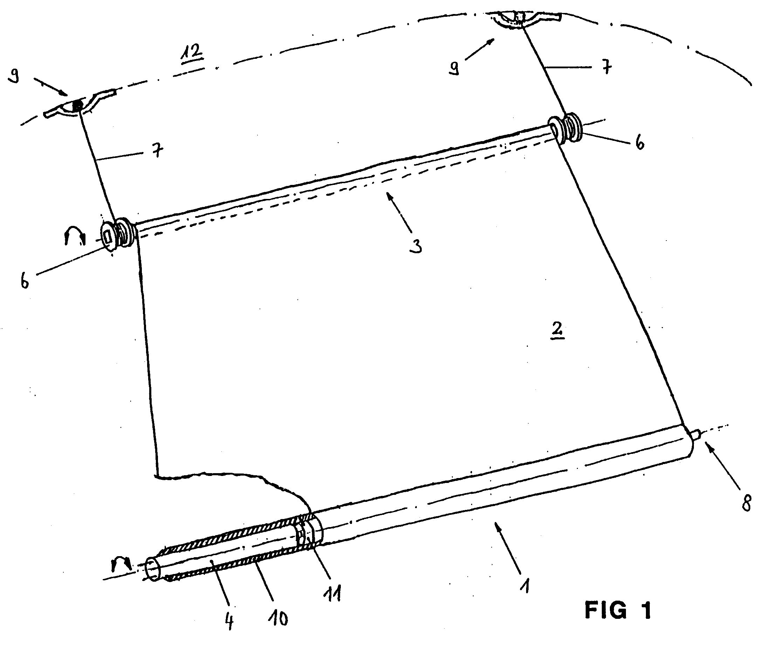

Fig. 1 zeigt eine Wickelwelle 1 in teilweise aufgeschnittener Darstellung. Die Wickelwelle ist an nicht dargestellten Befestigungspunkten gelagert und weist einen Motor 4, ein Wickelrohr 10, ein Verbindungsstück 11 zur Übertragung der Drehbewegungen des Motors auf das Wickelrohr 10 sowie den mehr oder weniger auf die Wikkelwelle aufgewickelten Behang 2 auf.

Der Behang ist bei diesem Ausführungsbeispiel trapezförmig zugeschnitten, so daß ein an dem ausziehbaren Ende des Behanges befestigter Fallstab 3 kürzer ist, als die Wickelwelle.

Am Fahrzeughimmel 12 befinden sich zweite Befestigungspunkte 9, in denen eine Schnur 7 eingehakt ist. Diese Schnur 7 ist auf eine Seilrolle 6 aufgewickelt. In dem Fallstab 3 befindet sich eine Drehfeder 5, die die Seilrolle mit einem Drehmoment beaufschlagt, so daß der Behang 2 - bei Freigabe der Wickelwelle 1 - von dieser abgewickelt wird. Das auf die Seilrolle ausgeübte Drehmoment führt dazu, daß sich die Schnur auf der Rolle aufwickelt.

Durch Inbetriebnahme des Motors 4 wird der Behang entgegen der Kraft der Drehfeder wieder auf die Wickelwelle aufgerollt und damit gleichzeitig die Drehfeder 5 vorgespannt.

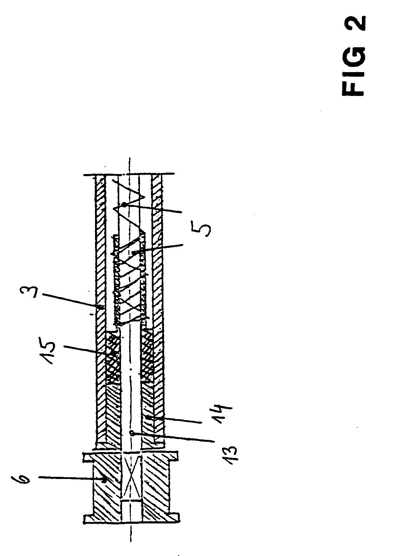

Fig. 2 zeigt den Endbereich des Fallstabes 3 im Querschnitt. Die Seilrolle 6 ist mit einer Achse 13 versehen, die in einem Lager 14 gelagert ist. An der Achse 13 ist ein Federmitnehmer 15 befestigt, an dem die Drehfeder 5 angreift und das Drehmoment auf die Seilrolle 6 überträgt.

Bei einer alternativen Ausführungsform ist die Schnur 7 als Perlenschnur ausgebildet. Anstatt der Seilrollen 6 sind dann an den Enden des Fallstabes entsprechende Zahnräder vorgesehen, die formschlüssig in die Perlenschnur eingreifen und an dieser hochlaufen. Das freie Ende der Perlenschnur ist im unteren Bereich der Heckscheibe an einer Kassette festgelegt.

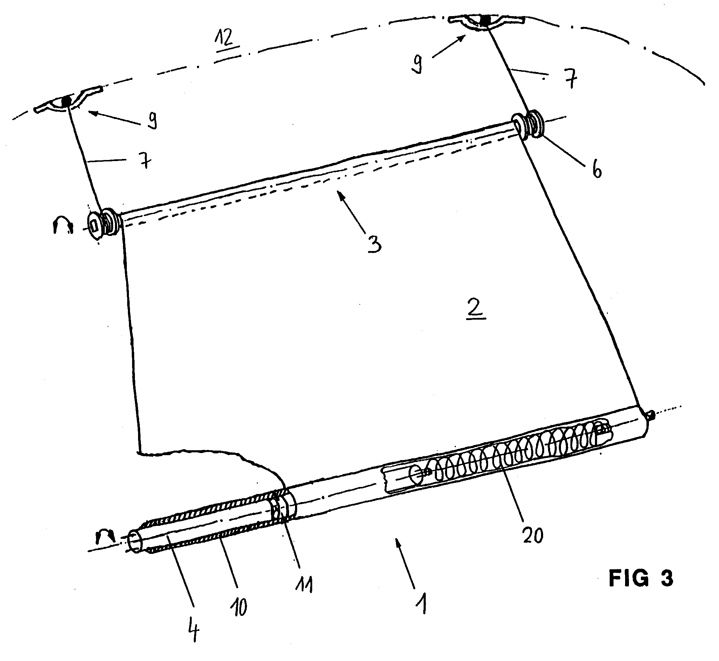

Eine bevorzugte Weiterbildung der Erfindung ist in Figur 3 gezeigt. Diese Figur zeigt die Wickelwelle 1 teilweise aufgeschnitten, so daß eine Drehfeder 20 erkennbar ist, deren eines Ende von der Drehung der Motorachse beaufschlagt wird, und deren anderes Ende drehfest fixiert ist. Diese als zweiter Kraftspeicher dienende Drehfeder ist bei abgewickelten Behang gespannt und unterstützt den Motor 4 bei der Aufwickelung des Behangs auf die Wickelwelle. Die Vorspannung dieser Drehfeder erfolgt während der Abwickelung des Behangs dadurch, daß der Motor 4 mit umgekehrter Drehrichtung betrieben wird. Die dadurch während des Abwickelvorgangs in der Drehfeder gespeicherte Kraft unterstützt den Motor beim Aufwickelvorgang, so daß dieser besser ausgenutzt wird und nur ein geringeres Drehmoment aufzubringen braucht.

## Patentansprüche

1. Rolloanordnung, vorzugsweise für Kraftfahrzeugheckscheiben, mit
einer Wickelwelle (1),
einem Behang (2), der von der Wickelwelle abziehbar und auf diese aufwickelbar ist,
einem Fallstab (3), der an dem abziebaren Rand des Behangs (2) befestigt ist,
ersten Befestigungspunkten (8), an denen die Wickelwelle befestigt ist,
zweiten Befestigungspunkten (9), mit denen die Ebene aufgespannt und begrenzt wird, in welcher der Behang (2) in abgewickeltem Zustand liegt, sowie
einem Motor (4) und einem durch diesen vorspannbaren ersten Kraftspeicher zur Betätigung des Behanges,
wobei der Motor (4) die Wickelwelle (1) unmittelbar antreibt und den Behang (2) auf die Wickelwelle aufwickelt, und der erste Kraftspeicher zwischen den zweiten Befestigungspunkten (9) einerseits und den Enden des Fallstabes (3) andererseits angreift und bei Freigabe der Wickelwelle (1) den Fallstab (3) von der Wickelwelle abzieht und den Behang (2) abwickelt,
dadurch gekennzeichnet,
daß der erste Kraftspeicher (5) am Fallstab (3) angebrachte Drehfedern (5) aufweist, die über Schnüre (7) an den zweiten Befestigungspunkten (9) angreifen.

2. Rolloanordnung nach Anspruch 1,
dadurch gekennzeichnet, daß der Fallstab (3) an seinen Enden je eine Seilrolle (6) aufweist, und daß die Drehfedern (5) die Seilrolle (6) mit einem Drehmoment beaufschlagen, so daß die jeweils in den zweiten Befestigungspunkten (9) befestigten Schnüre (7) bei Freigabe der Wickelwelle (1) auf die Seilrollen (6) aufgewickelt werden und der Behang (2) von der Wickelwelle (1) abgewickelt wird.

3. Rolloanordnung nach Anspruch 1,
dadurch gekennzeichnet, daß die Schnüre (7) als Perlenschnüre ausgebildet sind, daß der Fallstab (3) an seinen Enden je ein zum Eingriff mit der Perlenschnur ausgebildetes Zahnrad aufweist, und daß die Drehfedern (5) die Zahnräder mit einem Drehmoment beaufschlagen, so daß bei Freigabe der Wickelwelle (1) die Zahnräder entlang der mindestens in den zweiten Befestigungspunkten (9) befestigten Perlenschnur laufen und der Behang (2) von der Wickelwelle (1) abgewickelt wird.

4. Rolloanordnung nach den Ansprüchen 1, 2 oder 3,
dadurch gekennzeichnet, daß die Wickelwelle (1) parallel und in der Nähe zum unteren Scheibenrand angeordnet ist und der Fallstab (3) mit dem daran befestigen Ende des Behanges (2) in Richtung auf den oberen Scheibenrand bewegbar ist.

5. Rolloanordnung nach Anspruch 4,
dadurch gekennzeichnet, daß der Behang (2) eine in Richtung auf sein an dem Fallstab (3) befestigtes Ende abnehmende Breite aufweist.

6. Rolloanordnung nach den Ansprüchen 1, 2, 3, 4 oder 5,
dadurch gekennzeichnet, daß der Motor (4) in der Wickelwelle (1) eingebaut ist.

7. Rolloanordnung nach nach den Ansprüchen 1, 2, 3, 4, 5 oder 6,
gekennzeichnet durch einen zweiten Kraftspeicher (20) in der Wickelwelle (1), der beim Abwickeln des Behangs (2) vorspannbar ist.

8. Rolloanordnung nach Anspruch 7,
dadurch gekennzeichnet, daß der zweite Kraftspreicher eine Drehfeder (20) ist, die einerseits mit der Antriebswelle des Motors (4) verbunden und andererseits drehfest fixiert ist.

9. Rolloanordnung nach Anspruch 7 oder 8,
dadurch gekennzeichnet, daß der Motor (4) während der Abwicklung des Behangs (2) in gegenüber der Aufwicklung umgekehrter Drehrichtung betreibbar ist.

10. Rolloanordnung nach mindestens einem der Ansprüche 7 bis 9,
dadurch gekennzeichnet, daß die Aufwicklung des Behangs (2) durch den zweiten Kraftspeicher (5) unterstützbar ist.

## Claims

1. A roller blind arrangement, preferably for motor vehicle rear windows, having a winding shaft (1), a hanging portion (2) which may be drawn down from and wound onto the winding shaft, a lowerable rod (3) which is secured to that edge of the hanging portion (2) which may be drawn down, first securing points (8) to which the winding shaft is secured, second securing points (9) by means of which the plane in which the hanging portion (2) lies in the unwound state is tensioned and delimited, and a motor (4) and a first energy store, which may be pretensioned by the motor, for actuating the hanging portion, where the motor (4) drives the winding shaft (1) directly and winds the hanging portion (2) onto the winding shaft, and the first energy store acts between the second securing points (9) on the one hand and the ends of the lowerable rod (3) on the other hand and, when the winding shaft (1) is released, draws the lowerable rod (3) down from the winding shaft and unwinds the hanging portion (2), characterized in that the first energy store (5) has rotary springs (5) which are mounted on the lowerable rod (3) and act by way of strings (7) on the second securing points (9).

2. A roller blind arrangement according to Claim 1, characterized in that the lowerable rod (3) has a cable roller (6) at each of its ends, and in that the rotary springs (5) impart a torque to the cable roller (6) so that the strings (7) which are respectively secured at the second securing points (9) are wound onto the cable rollers (6) when the winding shaft (1) is released, and the hanging portion (2) is unwound from the winding shaft (1).

3. A roller blind arrangement according to Claim 1, characterized in that the strings (7) are constructed as strings of beads, in that the lowerable rod (3) has at each of its ends a toothed wheel constructed to engage with the string of beads, and in that the rotary springs (5) impart a torque to the toothed wheels so that, when the winding shaft (1) is released, the toothed wheels run along the string of beads, which is secured at least at the second securing points (9), and the hanging portion (2) is unwound from the winding shaft (1).

4. A roller blind arrangement according to Claims 1, 2 or 3, characterized in that the winding shaft (1) is arranged parallel to and in the vicinity of the lower window edge and the lowerable rod (3), with the end of the hanging portion (2) secured to it, is movable in the direction of the upper window edge.

5. A roller blind arrangement according to Claim 4, characterized in that the hanging portion (2) has a width decreasing towards its end secured to the lowerable rod (3).

6. A roller blind arrangement according to Claims 1, 2, 3, 4 or 5, characterized in that the motor (4) is incorporated into the winding shaft (1).

7. A roller blind arrangement according to Claims 1, 2, 3, 4, 5 or 6, characterized by a second energy store (20) in the winding shaft (1), it being possible to pretension this second energy store (20) as the hanging portion (2) is unwound.

8. A roller blind arrangement according to Claim 7, characterized in that the second energy store is a rotary spring (20) which is connected at one end to the drive shaft of the motor (4) and is fixed to prevent rotation at the other end.

9. A roller blind arrangement according to Claim 7 or 8, characterized in that, while the hanging portion (2) is being unwound, the motor (4) may be operated in a direction of rotation opposed to that of winding up.

10. A roller blind arrangement according to at least one of Claims 7 to 9, characterized in that winding up the hanging portion (2) may be promoted by the second energy store (5).

## Revendications

1. Dispositif de store, de préférence pour lunette arrière de véhicule, comprenant
une broche d'enroulement (1),
une tenture (2), qui peut être déroulée de la broche d'enroulement et être enroulée sur celle-ci,
une tige mobile (3), qui est fixée sur l'extrémité de la tenture (2) qui se déroule,
des premiers points de fixation (8), sur lesquels est fixée la broche d'enroulement (1),
des deuxièmes points de fixation (9), qui permettent d'étendre et de limiter le plan dans lequel s'étend la tenture (2) à l'état déroulé, ainsi que
un moteur (4) et un premier accumulateur de force, qui peut être précontraint par ce dernier et destiné à manoeuvrer la tenture,
le moteur (4) étant destiné à commander directement la broche d'enroulement (1) et à enrouler la tenture (2) sur la broche d'enroulement, et le premier accumulateur de force étant destiné à agir entre les deuxièmes points de fixation (9), d'une part, et les extrémités de la tige mobile (3), d'autre part, pour détacher la tige mobile (3) de la broche d'enroulement (1), lors du déblocage de la broche d'enroulement (1), et dérouler la tenture (2),
caractérisé en ce que le premier accumulateur de force (5) est muni de ressorts à branches (5) fixés sur la tige mobile (3), qui agissent sur les deuxièmes points de fixation (9) par l'intermédiaire de cordons (7).

2. Dispositif de store selon la revendication 1, caractérisé en ce que les extrémités de la tige mobile (3) sont munies chacune d'une poulie pour cordon (6) et en ce que les ressorts à branches (5) appliquent un couple de rotation sur les poulies pour cordon (6), de telle sorte que, lors du déblocage de la broche d'enroulement (1), les cordons (7), fixés chacun sur les deuxièmes points de fixation (9), sont enroulés sur les poulies pour cordon (6) et la tenture (2) est déroulée de la broche d'enroulement (1).

3. Dispositif de store selon la revendication 1, caractérisé en ce que les cordons (7) sont conçus comme des cordons à perles, en ce que chaque extrémité de la tige mobile (3) est munie d'une roue dentée sur laquelle engrène le cordon à perles, et en ce que les ressorts à branches (5) appliquent un couple de rotation sur les roues dentées, de telle sorte que, lors du déblocage de la broche d'enroulement (1), les roues dentées roulent le long du cordon à perles, fixé au moins dans les deuxièmes points de fixation (9), et la tenture (2) est déroulée de la broche d'enroulement (1).

4. Dispositif de store selon la revendication 1, 2 ou 3, caractérisé en ce que la broche d'enroulement (1) est montée parallèlement et à proximité du bord inférieur de la vitre, et la tige mobile (3) avec l'extrémité de la tenture (2) qui y est fixée peut être déplacée dans la direction du bord supérieur de la vitre.

5. Dispositif de store selon la revendication 4, caractérisé en ce que la largeur de la tenture (2) décroît en allant vers l'extrémité fixée sur la tige mobile (3).

6. Dispositif de store selon les revendications 1, 2, 3, 4 ou 5, caractérisé en ce que le moteur (4) est incorporé dans la broche d'enroulement (1).

7. Dispositif de store selon les revendications 1, 2, 3, 4, 5 ou 6, caractérisé en ce qu'il comprend un deuxième accumulateur de force (20), monté dans la broche d'enroulement (1), lequel peut être précontraint pendant le déroulement de la tenture (2).

8. Dispositif de store selon la revendication 7, caractérisé en ce que le deuxième accumulateur de force est un ressort à branches (20), qui, d'une part, est relié à l'arbre de commande du moteur (4) et, d'autre part, est fixé de manière à résister à la torsion.

9. Dispositif de store selon la revendication 7 ou 8, caractérisé en ce que, pendant le déroulement de la tenture (2), le moteur (4) peut être actionné dans le sens inverse du sens de rotation de l'enroulement.

10. Dispositif de store selon l'une quelconque des revendications 7 à 9, caractérisé en ce que l'enroulement de la tenture (2) peut être aidé par le deuxième accumulateur de force (5).
